# EUROPÄISCHE PATENTANMELDUNG

(11) **EP 2 172 365 A1**
(43) Veröffentlichungstag der Anmeldung: **07.04.2010**
(21) Anmeldenummer: 09011900.9
(22) Anmeldetag: 18.09.2009
(51) Int. Cl.: B60P 3/34, B60J 11/00

(54) **Schutzfolie für einen Anhänger**

(30) Priorität: 06.10.2008 DE 202008013108 U
(71) Anmelder: VERPA Verpackungswerke Kunststoffwerk Weidhausen Joachim Baumann KG, 96279 Weidhausen (DE)
(72) Erfinder: Keller, Christa, 69168 Wiesloch (DE); Baumann, Joachim, 96279 Weidhausen (DE)
(74) Vertreter: Hofmann, Matthias

(57) **Zusammenfassung**

Die Erfindung betrifft eine Anordnung aus einem Anhänger (1) zum Transport von Tieren, insbesondere von Pferden, und aus einer Schutzfolie (14). Der Anhänger (1) hat ein Fahrgestell (2) und einen von dem Fahrgestell (2) getragenen kastenartigen Aufbau (8) für das zu transportierende Tier. Der Aufbau (8) umfasst eine Frontwand (11), Seitenwände (9), eine Decke (12) und eine Bodenplatte. Ferner hat der Anhänger (1) eine Kupplungseinrichtung (6) zum Anhängen des Anhängers (1) an ein Zugfahrzeug. Die Schutzfolie (14) umgibt zumindest teilweise den kastenartigen Aufbau (8) zum Schutz desselben vor Witterungseinflüssen.

## Beschreibung

Die Erfindung betrifft eine Anordnung mit einem Anhänger zum Transport von Tieren, insbesondere von Pferden.

Pferdeanhänger können oftmals nicht in Garagen oder Unterständen abgestellt werden. Sie sind durch das Abstellen im Freien erhöhten Umwelteinflüssen, wie UV-Strahlung, Abgasen, Regen, Eis oder Schnee, ausgesetzt. Durch die Umwelteinflüsse wird - vor allem im Winter - beträchtlich die Lebensdauer des Pferdeanhängers reduziert. Der Pferdeanhänger verliert so aufgrund der erhöhten Alterung sehr schnell an Wert.

Der Erfindung liegt daher die Aufgabe zugrunde, eine Anordnung zu schaffen, die die auf einen betreffenden Anhänger einwirkenden Einflüsse erheblich reduziert und dadurch seine Lebensdauer wesentlich erhöht.

Diese Aufgabe wird erfindungsgemäß durch die in den Ansprüchen 1 und 15 angegebenen Merkmale gelöst. Der Kern der Erfindung besteht darin, den kastenartigen Aufbau des Anhängers, wenn der Anhänger nicht benutzt wird bzw. wenn dieser für längere Zeit nicht zum Einsatz kommen soll, mindestens teilweise mit einer Schutzfolie zu umhüllen, so dass der Alterungsprozess des Aufbaus erheblich verlangsamt wird. Dichtungen des Aufbaus werden dabei auch geschützt. Durch die Schutzfolie kann auf einen teuren Unterstand bzw. auf eine Garage für den Anhänger verzichtet werden. Die Schutzfolie übernimmt dabei sicher den Schutz vor Witterungseinflüssen. Unter dem angegebenen Ausdruck "umgibt" wird insbesondere verstanden, dass die Schutzfolie mindestens zwei Seiten bzw. Flächen des Aufbaus bedeckt bzw. vor Witterungseinflüssen schützt. Die Schutzfolie bedeckt somit nicht nur eine Seite bzw. Fläche des Aufbaus.

Insbesondere bedeckt die Schutzfolie mindestens zwei Seiten bzw. Flächen des Aufbaus, die schräg bzw. im Wesentlichen senkrecht zueinander verlaufen. Analoges gilt insbesondere auch für den verwendeten Ausdruck "umhüllen".

Weitere vorteilhafte Ausgestaltungen sind in den Unteransprüchen angegeben.

Nachfolgend wird unter Bezugnahme auf die beigefügte Zeichnung eine bevorzugte Ausführungsform der Erfindung beschrieben. Dabei zeigen:
- Fig. 1: eine perspektivische Teil-Ansicht von schräg vorne eines betreffenden Anhängers,
- Fig. 2: eine perspektivische Ansicht von schräg hinten des in Fig. 1 dargestellten Anhängers, an dem eine erfindungsgemäße Schutzfolie angebracht ist,
- Fig. 3: eine Seitenansicht des in Fig. 1 und 2 dargestellten Anhängers, wobei dessen Aufbau mit einer Schutzfolie umhüllt ist,
- Fig. 4: eine Vorderansicht des in Fig. 3 dargestellten umhüllten Anhängers,
- Fig. 5: eine Ansicht von schräg hinten des in Fig. 3 dargestellten umhüllten Anhängers, und
- Fig. 6: einen Zuschnitt der erfindungsgemäßen Schutzfolie.

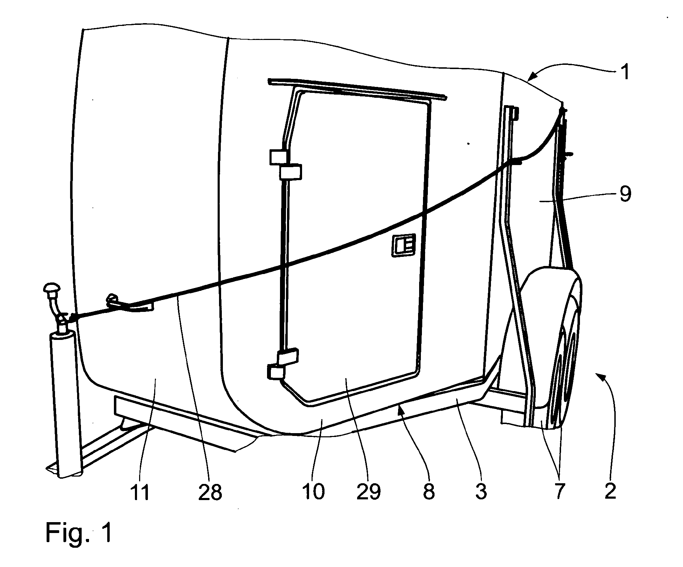

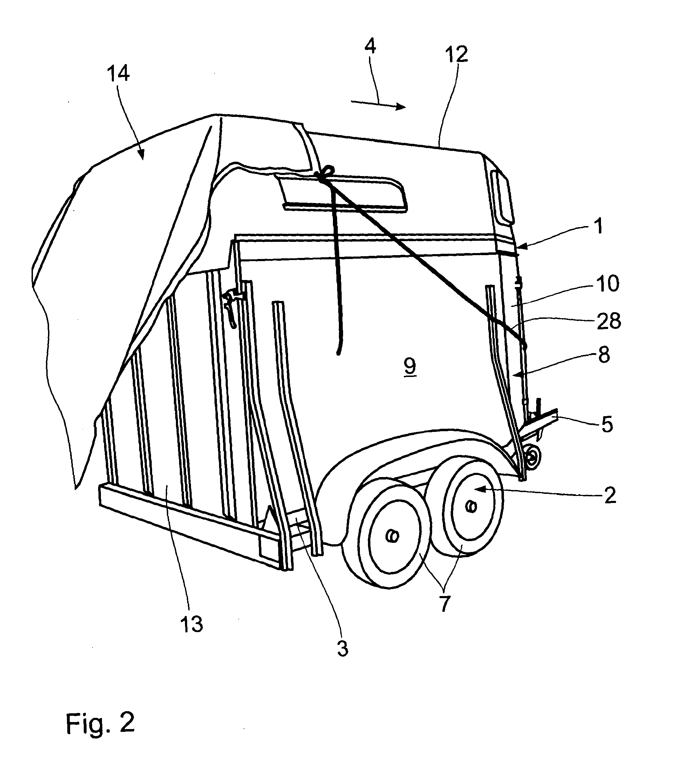

Insbesondere bezugnehmend auf die Fig. 1 und 2 wird zunächst ein unverhüllter, bekannter Pferdeanhänger 1 beschrieben ist, der zum Transport von Pferden dient. Die Erfindung kann auch bei anderen Anhängern zur Anwendung kommen. Der Pferde- bzw. Fahrzeuganhänger 1 besitzt ein Fahrgestell 2 mit zwei Längsträgern 3, die sich in der angedachten Fahrtrichtung 4 des Pferdeanhängers 1 erstrecken. Der Pferdeanhänger 1 ist im Wesentlichen bezüglich einer in Fahrtrichtung 4 verlaufenden vertikalen Mittelebene symmetrisch aufgebaut. Mit dem Fahrgestell 2 ist vorderseitig eine Deichsel 5 verbunden, die vorne eine topfartige Kupplungseinrichtung 6 zum Anhängen des Pferdeanhängers 1 an ein nicht dargestelltes Zugfahrzeug, insbesondere an einen Personenwagen, umfasst. Zu dem Fahrgestell 2 gehören außerdem vier paarweise angeordnete, drehbar gelagerte Räder 7, so dass der Pferdeanhänger 1 leicht bewegt bzw. gezogen werden kann.

Auf dem Fahrgestell 2 befindet sich ein kastenartiger Aufbau 8, der im Wesentlichen geschlossen ist und hier zum Transport von einem Pferd dient. Der Aufbau 8 umfasst eine auf dem Fahrgestell 2 montierte Bodenplatte, die als Ladeplattform dient. Mit der Bodenplatte sind zwei einander gegenüberliegende, beabstandete Seitenwände 9 verbunden, die sich in Fahrtrichtung 4 erstrecken. An die Seitenwände 9 schließen sich in Fahrtrichtung 4 zwei Schrägwände 10 an, so dass sich der Aufbau 8 in dem Bereich der Schrägwände 10 gleichmäßig nach vorne verjüngt. In einer Schrägwand 10 ist dabei eine Zugangstür 29 vorgesehen. Mit den Schrägwänden 10 ist eine Frontwand 11 verbunden, die senkrecht zu der Fahrtrichtung 4 und zu den Seitenwänden 9 orientiert ist. Die Seitenwände 9, die Schrägwände 10 und die Frontwand 11 stehen jeweils senkrecht auf der Bodenplatte. Sie sind außerdem über eine zu der Bodenplatte parallelen Decke 12 miteinander verbunden, so dass der Aufbau 8 oben geschlossen ist. Rückseitig besitzt der Aufbau 8 eine untere Klappe 13, die an dem Fahrgestell 2 oder an der Bodenplatte angelenkt ist und um eine horizontale Schwenkachse verschwenkbar ist. Die Klappe 13 bildet quasi eine Rückwand und dient in ihrer herabgelassenen Position als Rampe bzw. Aufstieg für ein in den Aufbau 8 zu führendes Pferd. Der im Wesentlichen aus der Bodenplatte, den Seitenwänden 9, den Schrägwänden 10, der Frontwand 11, der Decke 12 und der Klappe 13 gebildete Aufbau 8 begrenzt somit einen Innenraum für das zu transportierende Pferd, der bei herabgelassener Klappe 13 von hinten zugänglich ist. Durch die Zugangstür 29 kann der Pferdehalter außerdem in den Innenraum gelangen.

Zum Schutz des Pferdeanhängers 1 vor Witterungseinflüssen ist eine Schutzfolie 14 vorgesehen, die reißfest und witterungsbeständig ausgebildet ist. UV-Stabilisatoren können in der Schutzfolie 14 vorgesehen sein, um deren Lichtbeständigkeit zu erhöhen. Die Abmessungen der Schutzfolie 14 sind entsprechend des zu umhüllenden Pferdeanhängers 1 gewählt. Die Schutzfolie 14 kann einschichtig oder mehrschichtig sein und aus Kunststoff bestehen. Als Kunststoffmaterialien können beispielsweise Polyvinylchlorid (kurz PVC) oder Polyolefine, wie Polyethylen beziehungsweise Polypropylen, Anwendung finden. Auf der dem Pferdeanhänger 1 zugewandten Seite kann vorzugsweise eine Gewebe-, Luftpolster- oder Vlieslage vorgesehen sein. Die Schutzfolie 14 ist wasserundurchlässig. Bei der mehrschichtigen Schutzfolie 14 kann hierfür eine äußere wasserundurchlässige Kunststofflage vorgesehen sein.

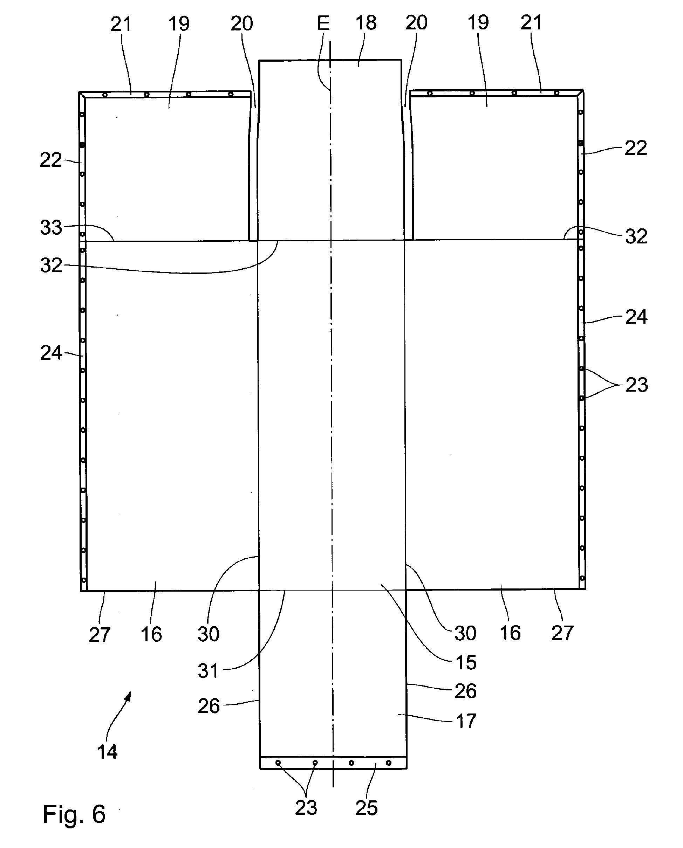

Nachfolgend werden unter Bezugnahme auf Fig. 6 der Aufbau und die Gestalt der Schutzfolie 14 näher erläutert. Die Schutzfolie 14 ist im Wesentlichen einstückig und bezüglich einer Mittelebene E symmetrisch, die - wenn die Schutzhülle 14 an dem Pferdeanhänger 1 wie nachfolgend beschrieben angebracht ist - in Fahrtrichtung 4 verläuft. Die Schutzfolie 14 besitzt ein zentrales Deckenfeld 15. An die einander gegenüber liegenden Längsränder 30 des Deckenfelds 15 schließt sich jeweils seitlich ein Seitenfeld 16 an. Hinten ist mit dem Deckenfeld 15 über eine Verbindungslinie 31 ein Rückfeld 17 verbunden. Vorne steht mit dem Deckenfeld 15 über eine Verbindungslinie 32 ein Frontfeld 18 in Verbindung. Mit jedem Seitenfeld 16 ist vorne außerdem über eine entsprechende Verbindungslinie 33 ein Schrägfeld 19 verbunden, das jedoch getrennt zu dem Frontfeld 18 ausgebildet ist. Hierfür erstreckt sich eine Trennlinie 20 zwischen dem Frontfeld 18 und dem entsprechenden Schrägfeld 19.

Das Deckenfeld 15 entspricht in seiner Größe und Gestalt im Wesentlichen der Decke 12 des Aufbaus 8. Es ist im Wesentlichen rechteckig. Das Rückfeld 17 entspricht in seiner Größe und Gestalt im Wesentlichen der Klappe 13 bzw. der durch die Klappe 13 verschlossenen rückseitigen Öffnung des Aufbaus 8. Es weist eine im Wesentlichen rechteckige Form auf. Die Seitenfelder 16, die eine im Wesentlichen rechteckige Form besitzen, entsprechen in ihrer Größe und Gestalt im Wesentlichen den Seitenwänden 9 des Aufbaus 8, während die Schrägfelder 19 in ihrer Größe und Gestalt im Wesentlichen den Schrägwänden 10 des Aufbaus 8 entsprechen. Auch die Schrägfelder 19 sind im Wesentlichen rechteckig. Das Frontfeld 18 ist dagegen in seiner Größe und Gestalt im Wesentlichen an die Frontwand 11 des Aufbaus 8 angepasst. Es ist im Wesentlichen rechteckig.

Wie insbesondere aus Fig. 6 hervorgeht, hat jedes Schrägfeld 19 verstärkte äußere Ränder 21, 22, in welchen mehrere, voneinander beabstandete Befestigungsöffnungen 23 vorgesehen sind. Die Ränder 22 schließen die Schrägfelder 19 nach seitlich außen ab. An die Ränder 22 schließen sich entsprechende verstärkte, äußere Ränder 24 der Seitenfelder 16 bündig an. Auch in diesen sind Befestigungsöffnungen 23 vorhanden. Die Ränder 21 verlaufen dagegen senkrecht zu den Rändern 22, 24 und bilden ebenfalls einen Abschluss. Das Rückfeld 17 hat einen verstärkten hinteren Rand 25 mit Befestigungsöffnungen 23. Der hintere Rand 25 verläuft gemäß Fig. 6 parallel zu den vorderen Rändern 21. Die verstärkten Ränder 21, 22, 24, 25 können beispielsweise erzeugt werden, indem ein entsprechender Randbereich der Schutzfolie 14 umgeschlagen und so angeschweißt wird. Die verstärkten Ränder 21, 22, 24, 25 wären dann doppelt so dick wie die übrige Schutzfolie 14.

Ferner besitzt das Rückfeld 17 zwei einander gegenüberliegende, seitliche Ränder 26, die senkrecht zu dem Rand 25 verlaufen und mit benachbarten hinteren Rändern 27 der Seitenfelder 16 fest verbunden, beispielsweise verschweißt, sind, so dass quasi ein haubenartiger Abschluss gebildet wird. Dies ist in Fig. 6 nicht dargestellt.

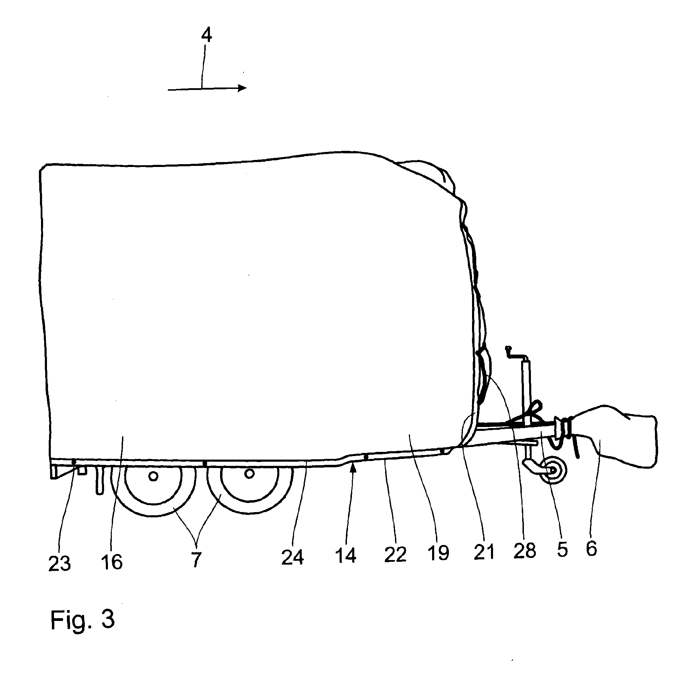

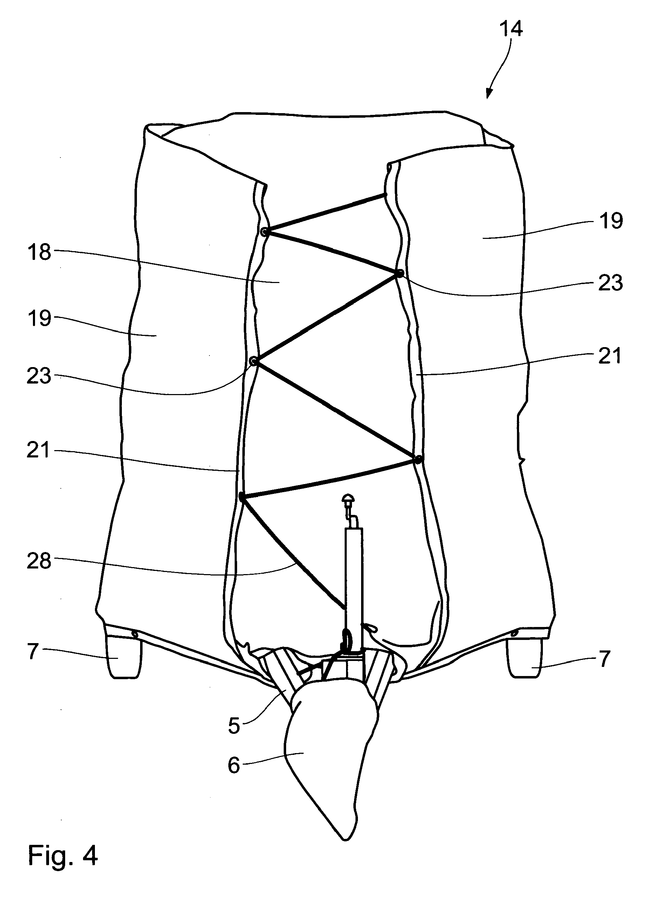

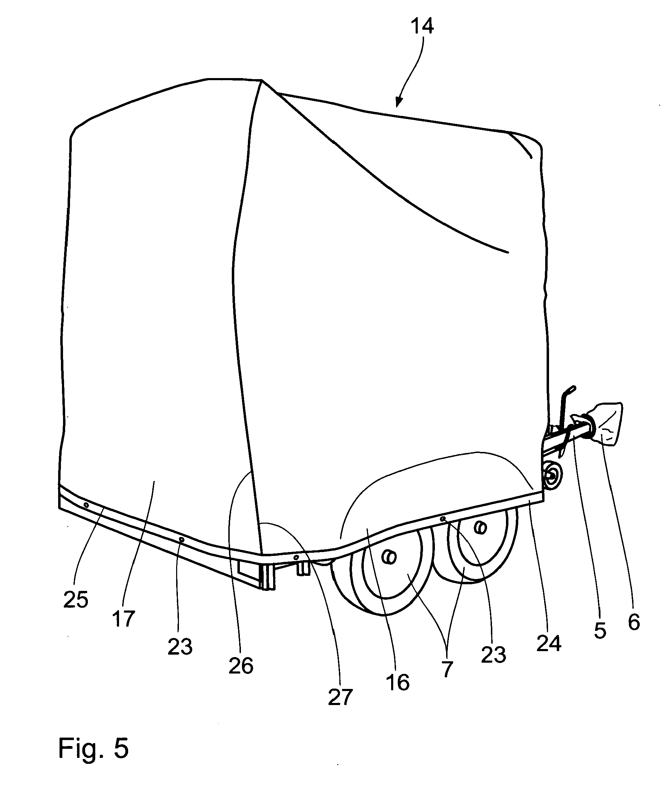

Nachfolgend wird insbesondere unter Bezugnahme auf die Fig. 2 bis 5 die Anbringung und Fixierung der Schutzfolie 14 an dem Pferdeanhänger 1 näher beschrieben. Die Schutzfolie 14 ist zunächst von hinten über den Aufbau 8 zu ziehen, wobei das Frontfeld 18 und die Schrägfelder 19 vorangehend bzw. führend sind. Dieser anfängliche Zustand ist in Fig. 2 gezeigt. Dann sind die einzelnen Felder 15 bis 19 der Schutzfolie 14 nach dem Aufbau 8 auszurichten und an diesem fixieren. Hierfür ist ein Zugband 28 durch die Befestigungsöffnungen 23 in den beiden Rändern 21 zu führen. Wie aus Fig. 4 hervorgeht, verlaufen die Ränder 21 vertikal und beabstandet zueinander, wobei das Frontfeld 18 von diesen teilweise seitlich bedeckt wird. Durch das Zugband 28 werden die Schrägfelder 19 und das Frontfeld 18 zueinander fixiert. Außerdem wird hierdurch die Schutzfolie 14 dicht an den Aufbau 8 angezogen und so an diesem festgelegt.

Über die Befestigungsöffnungen 23 in den Rändern 22, 24, 25, die dann horizontal verlaufen, ist die Schutzfolie 14 unten an dem Fahrgestell 2 über eine weitere Schnur zu fixieren. Durch die unmittelbare, bereits vorgefertigte Verbindung der Ränder 26, 27 wird die Anbringung der Schutzhaube 14 erleichtert, da hierdurch quasi eine Haube gebildet wird. In dem fertig verpackten Zustand liegt das Deckenfeld 15 an der Decke 12, die Seitenfelder 16 an den Seitenwänden 9, das Rückfeld 17 an der Klappe 13, die Schrägfelder 19 an den Schrägwänden 10 und das Frontfeld 18 an der Frontwand 11 außen jeweils dicht an. Die Bodenplatte wird nicht mit abgedeckt. Die Schutzfolie 14 folgt dabei der Verjüngung des Pferdeanhängers 1. Die Felder 15, 16, 17, 18, 19 sind dabei im Wesentlichen an die jeweils zu bedeckenden Seiten bzw. Flächen 9, 10, 11, 12, 13 des Aufbaus 8 in Größe und Form angepasst. Die einzelnen Felder 15 bis 19 liegen jeweils an den entsprechenden Wänden bzw. der Decke des Aufbaus 8 an. Die Felder 15 bis 19 bedecken diese somit außenseitig.

Das umgekehrte Abnehmen der Schutzfolie 14 ist auch wieder ohne größere Anstrengungen möglich.

Die Schutzfolie 14 kann außerdem Lüftungsöffnungen aufweisen, die einen Hitzestau verhindern bzw. einen Luftaustausch ermöglichen. Die Lüftungsöffnungen können als Perforationen oder Löcher ausgebildet sein. Sie befinden sich vorzugsweise in den Seitenfeldern 16, den Schrägfeldern 19, dem Rückfeld 17 und/oder dem Frontfeld 18. Die Schutzfolie 14 kann aber auch insgesamt atmungsaktiv ausgebildet sein.

Alternativ kann die Schutzfolie 14 auch über Spannkrallen oder Befestigungsclipse an dem Pferdeanhänger 1 befestigt werden. Vorzugsweise wird die Schutzfolie 14 bei Nichtgebrauch gefaltet in einem entsprechenden Aufbewahrungssack aufbewahrt.

Wie bereits erwähnt umfasst die Schutzfolie 14 ein zentrales Deckenfeld 15 zur Anlage an der Decke 12 des Aufbaus 8, ein hinten mit dem Deckenfeld 15 verbundenes Rückfeld 17 zur Anlage an einer hinteren Klappe 13 des Aufbaus 8 und sich an das Deckenfeld 15 seitlich anschließende Seitenfelder 16 zur Anlage an den Seitenwänden 9 des Aufbaus 8. Die Felder 15 bis 17 weisen jeweils eine im Wesentlichen rechteckige, an die Decke 12, die Klappe 13 bzw. an die Seitenwände 16 angepasste Form und Größe auf.

Ferner umfasst die Schutzfolie 14 ein vorne mit dem Deckenfeld 15 verbundenes Frontfeld 18 zur Anlage an der Frontwand 11 des Aufbaus 8 und ein sich an jedes Seitenfeld 16 anschließendes Schrägfeld 19 zur Anlage an den vorderen Schrägwänden 10 des Aufbaus 8. Die Schrägwände 10 verlaufen in Fahrtrichtung 4 zusammen. Die Felder 18, 19 weisen jeweils eine im Wesentlichen rechteckige, an die Frontwand 11 bzw. an die Schrägwände 10 angepasste Form und Größe auf.

## Patentansprüche

1. Anordnung
- aus einem Anhänger (1) zum Transport von Tieren, insbesondere von Pferden,
-- mit einem Fahrgestell (2),
-- mit einem von dem Fahrgestell (2) getragenen kastenartigen Aufbau (8) für das zu transportierende Tier, wobei der Aufbau (8) eine Frontwand (11), Seitenwände (9), eine Decke (12) und eine Bodenplatte umfasst,
-- mit einer Kupplungseinrichtung (6) zum Anhängen des Anhängers (1) an ein Zugfahrzeug, und
- aus einer Schutzfolie (14), die
-- zumindest teilweise den kastenartigen Aufbau (8) zum Schutz desselben vor Witterungseinflüssen umgibt.

2. Anordnung nach Anspruch 1, **dadurch gekennzeichnet, dass** die Schutzfolie (14) mindestens eine Befestigungsöffnung (23) zum Festlegen der Schutzfolie (14) an dem Anhänger (1) umfasst.

3. Anordnung nach Anspruch 2, **dadurch gekennzeichnet, dass** die Schutzfolie (14) in mindestens einem Randbereich (21, 22, 24, 25) verstärkt ist, wobei sich die mindestens eine Befestigungsöffnung (23) in dem mindestens einen verstärkten Randbereich (21, 22, 24, 25) befindet.

4. Anordnung nach einem der vorherigen Ansprüche, **dadurch gekennzeichnet, dass** die Schutzfolie (14) atmungsaktiv ist.

5. Anordnung nach einem der vorherigen Ansprüche, **dadurch gekennzeichnet, dass** die Schutzfolie (14) mindestens eine Lüftungsöffnung aufweist.

6. Anordnung nach einem der vorherigen Ansprüche, **dadurch gekennzeichnet, dass** die Schutzfolie (14) als einschichtige flexible Kunststofffolie ausgebildet ist.

7. Anordnung nach einem der Ansprüche 1 bis 5, **dadurch gekennzeichnet, dass** die Schutzfolie (14) als mehrschichtige flexible Folie ausgebildet ist.

8. Anordnung nach Anspruch 7, **dadurch gekennzeichnet, dass** die Schutzfolie (14) auf der dem Anhänger (1) zugewandten Seite eine Gewebelage aufweist.

9. Anordnung nach Anspruch 7, **dadurch gekennzeichnet, dass** die Schutzfolie (14) auf der dem Anhänger (1) zugewandten Seite eine Vlieslage aufweist.

10. Anordnung nach Anspruch 7, **dadurch gekennzeichnet, dass** die Schutzfolie (14) auf der dem Anhänger (1) zugewandten Seite eine Luftpolsterlage aufweist.

11. Anordnung nach Anspruch 1, **dadurch gekennzeichnet, dass** sich der Anhänger (1) in einem vorderen Bereich in Fahrtrichtung (4) verjüngt, wobei die Schutzfolie (14) im Bereich der Verjüngung komplementär an dem Anhänger (1) anliegt.

12. Anordnung nach einem der vorherigen Ansprüche, **dadurch gekennzeichnet, dass** die Schutzfolie (14) umfasst:
- ein zentrales Deckenfeld (15), das an der Decke (12) des Aufbaus (8) anliegt,
- ein hinten mit dem Deckenfeld (15) verbundenes Rückfeld (17), das an einer hinteren Klappe (13) des Aufbaus (8) anliegt, und
- sich an das Deckenfeld (15) seitlich anschließende Seitenfelder (16), die an den Seitenwänden (9) des Aufbaus (8) anliegen,
- wobei vorzugsweise das Deckenfeld (15), das Rückfeld (17) und die Seitenfelder (16) im Wesentlichen jeweils eine rechteckige, angepasste Form aufweisen.

13. Anordnung nach Anspruch 12, **dadurch gekennzeichnet, dass** die Seitenfelder (16) und das Rückfeld (17) über ihre Ränder (26, 27) unter Bildung einer Haube fest miteinander verbunden, vorzugsweise miteinander verschweißt, sind.

14. Anordnung nach Anspruch 12 oder 13, **dadurch gekennzeichnet, dass** die Schutzfolie (14) ferner umfasst:
- ein vorne mit dem Deckenfeld (15) verbundenes Frontfeld (18), das an der Frontwand (11) des Aufbaus (8) anliegt, und
- ein sich an jedes Seitenfeld (16) anschließendes Schrägfeld (19), wobei die Schrägfelder (19) an vorderen Schrägwänden (10) des Aufbaus (8) anliegen,
- wobei vorzugsweise das Frontfeld (18) und die Schrägfelder (19) im Wesentlichen jeweils eine rechteckige Form aufweisen, und
- wobei vorzugsweise das Frontfeld (18) und die Schrägfelder (19) über eine Trennlinie (20) voneinander getrennt sind.

15. Witterungs-Schutzfolie (14) zum mindestens teilweisen Umhüllen eines Anhängers (1) nach einem der Ansprüche 1 bis 14.
